(19) Europäisches Patentamt / European Patent Office / Office européen des brevets

(11) **EP 3 422 116 B1**

(12) **FASCICULE DE BREVET EUROPEEN**

(45) Date de publication et mention de la délivrance du brevet:
**04.11.2020 Bulletin 2020/45**

(51) Int Cl.:
*C21D 1/18* *(2006.01)* *C21D 9/02* *(2006.01)*
*G04B 17/06* *(2006.01)* *G04B 17/22* *(2006.01)*
*G04B 1/14* *(2006.01)* *C22C 14/00* *(2006.01)*
*C22C 27/02* *(2006.01)*

(21) Numéro de dépôt: **18176374.9**

(22) Date de dépôt: **06.06.2018**

(54) **RESSORT SPIRAL D'HORLOGERIE**

SPIRALFEDER EINES UHRWERKS

TIMEPIECE HAIRSPRING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.06.2017 EP 17177906
21.12.2017 CH 15932017**

(43) Date de publication de la demande:
**02.01.2019 Bulletin 2019/01**

(73) Titulaire: **Nivarox-FAR S.A.
2400 Le Locle (CH)**

(72) Inventeur: **Charbon, Christian
2054 Chézard-St-Martin (CH)**

(74) Mandataire: **ICB SA
Faubourg de l'Hôpital, 3
2001 Neuchâtel (CH)**

(56) Documents cités:
**EP-A1- 1 114 876     EP-A1- 1 258 786
DE-A1- 1 558 816**

**Description**

Domaine de l'invention

L'invention concerne un ressort spiralé d'horlogerie, notamment un ressort de barillet ou un ressort-spiral, à structure bi-phasée.

L'invention concerne encore un procédé de fabrication d'un ressort spiralé d'horlogerie.

L'invention concerne le domaine de la fabrication des ressorts d'horlogerie, en particulier des ressorts de stockage d'énergie, tels que ressorts de barillet ou ressorts-spiraux moteur ou de sonnerie, ou des ressorts d'oscillateur, tels que spiraux.

Arrière-plan de l'invention

La fabrication de ressorts de stockage d'énergie pour l'horlogerie doit faire face à des contraintes souvent à première vue incompatibles :

- nécessité d'obtention d'une limite élastique très élevée,
- nécessité d'obtention d'un module d'élasticité bas,
- facilité d'élaboration, notamment de tréfilage,
- excellente tenue en fatigue,
- tenue dans le temps,
- faibles sections,
- agencement des extrémités : crochet de bonde et bride glissante, avec des fragilités locales et une difficulté d'élaboration.

La réalisation de ressorts-spiraux est quant à elle centrée sur le souci de la compensation thermique, de façon à garantir des performances chronométriques régulières. Il faut pour cela obtenir un coefficient thermoélastique proche de zéro.

Toute amélioration sur au moins l'un des points, et en particulier sur la tenue mécanique de l'alliage utilisé, représente donc une avancée significative.

Le document US2007/0133355 au nom de Seiko décrit un ressort d'horlogerie permettant d'assurer une précision élevée et un fonctionnement stable de mécanismes de précision tels que des horloges, qui peut être un ressort d'horlogerie, un ressort moteur, ou un spiral. Ce ressort est formé d'un alliage spécial de titane et a une forme en S lorsqu'il est librement déployé, dans lequel le point d'inflexion auquel la direction de courbure de la forme librement déployée change est formé plus à l'intérieur que le milieu d'une extrémité intérieure à l'extrémité du côté d'enroulement et d'une extrémité extérieure à l'extrémité opposée à l'extrémité intérieure. L'alliage de titane présente une contrainte de traction élevée et un module d'Young moyen faible, permettant d'augmenter l'énergie mécanique accumulée dans le ressort moteur. Cet alliage peut être un alliage de titane avec un élément du groupe vanadium, avec notamment une proportion massique d'élément du groupe vanadium de 20 à 80%, et plus particulièrement de 30 à 60%. La proportion massique des constituants autres que le titane peut dépasser 50%. Aucune composition plus précise de l'alliage n'est pour autant divulguée pour le ressort décrit.

Le document WO2015/189278 au nom de Cartier décrit un ressort-spiral en alliage de titane contenant: une base en titane, de 10 à 40 % atomiques d'au moins un élément parmi Nb, Ta ou V, de 0 à 3% atomiques d'oxygène, de 0 à 6% atomiques de zirconium; et de 0 à 5 % atomiques de hafnium. Ce spiral est moins sensible à la température, et a une densité plus faible qu'un spiral classique.

Le document WO2018/172164 au nom de Université de Lorraine décrit un alliage de titane $\beta$ métastable comprenant, en pourcentage massique, entre 24 et 45% de niobium, entre 0 et 20% de zirconium, entre 0 et 10% de tantale et/ou entre 0 et 1.5% de silicium et/ou moins de 2% d'oxygène. Cet alliage présente une structure cristallographique qui comprend un mélange de phase austénitique et de phase alpha, et une présence de précipités de phase oméga dont la fraction volumique est inférieure à 10%. Ce document décrit encore un ressort d'horlogerie réalisé à base d'un tel alliage, et un procédé de fabrication d'un tel ressort.

Le document EP2993531 au nom de Précision Engineering AG décrit un procédé de mise en forme d'un ressort mécanique, en particulier un ressort-spiral, comprenant les étapes consistant à préparer un ressort, en particulier un ressort-spiral, comprenant au moins une section courbe prévue pour une remise en forme avec au moins une section déformable, puis à effectuer une étape de chauffe locale d'au moins la section déformable à une première température, qui se situe dans une plage de températures de formation semi-chaude du matériau de la section déformable, puis à imprimer un mouvement de la section déformable pour obtenir une forme de courbe prédéterminée dans la section déformable, ce mouvement étant effectué, ou bien après ou pendant l'étape de chauffe et dans un état semi-chaud, ou bien avant l'étape de chauffe.

Un bulletin de presse H. Moser & Cie et Précision Engineering du 22.11.2016 décrit un ressort-spiral pour organe réglant horloger en alliage niobium-titane, dont la composition n'est pas divulguée.

Résumé de l'invention

L'invention se propose de définir un nouveau type de ressort spiralé d'horlogerie, basé sur la sélection d'un matériau particulier, et de mettre au point le procédé de fabrication adéquat.

A cet effet, l'invention concerne un ressort spiralé d'horlogerie à structure biphasée, selon la revendication 1.

L'invention concerne encore un procédé de fabrication d'un tel ressort spiralé d'horlogerie, selon la revendication 7.

Description sommaire des dessins

D'autres caractéristiques et avantages de l'invention apparaîtront à la lecture de la description détaillée qui va suivre, en référence aux dessins annexés, où :

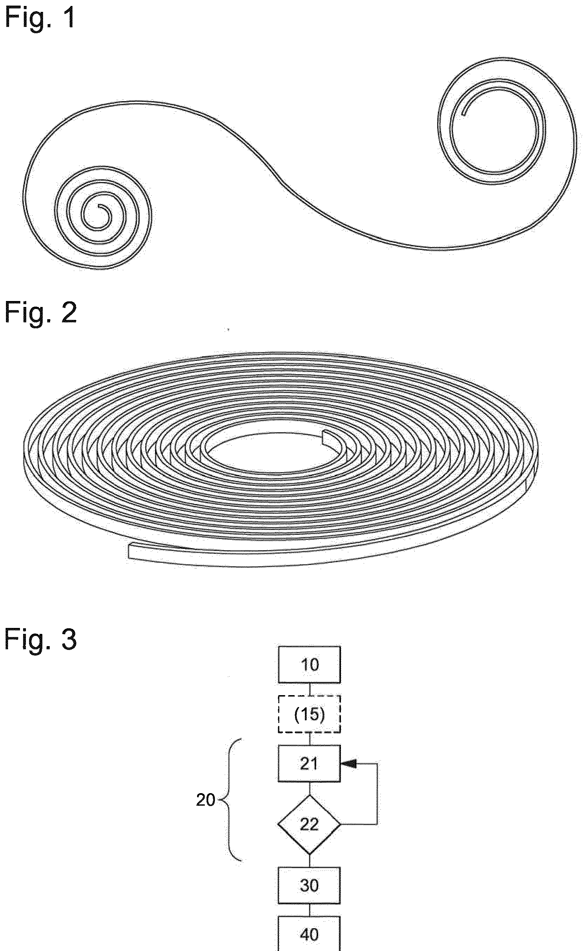

- la figure 1 représente, de façon schématisée et en vue en plan avant son premier armage, un ressort de barillet qui est un ressort spiralé selon l'invention ;
- la figure 2 représente, de façon schématisée, un ressort-spiral qui est un ressort spiralé selon l'invention ;
- la figure 3 représente la séquence des opérations principales du procédé selon l'invention.

Description détaillée des modes de réalisation préférés

L'invention concerne un ressort spiralé d'horlogerie à structure bi-phasée.

Selon l'invention, le matériau de ce ressort spiralé est un alliage de type binaire comportant du niobium et du titane. Cet alliage comporte :

- niobium : balance à 100% ;
- une proportion en masse de titane supérieure ou égale à 45.0% du total et inférieure ou égale à 48.0% du total,
- des traces d'autres composants parmi O, H, C, Fe, Ta, N, Ni, Si, Cu, Al, chacun desdits composants de traces étant compris entre 0 et 1600 ppm du total en masse, et la somme de ces traces étant inférieure ou égale à 0.3% en masse.

De façon avantageuse, ce ressort spiralé a une microstructure bi-phasée comportant du niobium bêta cubique centré et du titane alpha hexagonal compact.

Selon l'invention, ce ressort spiralé a une microstructure biphasée comprenant une solution solide de niobium avec du titane en phase β (structure cubique centrée) et une solution solide de niobium avec du titane en phase α (structure hexagonale compacte), la teneur en titane en phase α étant supérieure à 10% en volume.

Pour obtenir une telle structure, et convenant à l'élaboration d'un ressort, il est nécessaire de précipiter une partie de la phase alpha par traitement thermique.

Plus le taux de titane est élevé, plus la proportion maximale de phase alpha qui peut être précipitée par traitement thermique est élevée, ce qui incite à rechercher une forte proportion de titane. Mais a contrario, plus le taux de titane est élevé, plus il est difficile d'obtenir uniquement une précipitation de la phase alpha aux intersections des joints de grains. L'apparition de précipités de type Widmastätten alpha-Ti intragranulaire ou la phase ω intragranulaire rend la déformation du matériau difficile, voire impossible, ce qui ne convient alors pas à la réalisation d'un ressort spiralé, et il convient alors de ne pas incorporer trop de titane dans l'alliage. La mise au point de l'invention a permis de déterminer un compromis, avec un optimum entre ces deux caractéristiques voisin de 47 % de titane en masse.

Aussi, plus particulièrement, la proportion en masse de titane est supérieure ou égale à 46.5% du total.

Plus particulièrement, la proportion en masse de titane est inférieure ou égale à 47.5% du total.

Dans une alternative, la balance à 100% du total en masse est faite par le titane, et la proportion en masse de niobium est supérieure ou égale à 51.7% du total et inférieure ou égale à 55.0% du total.

Dans une autre variante de composition, la proportion en masse de titane est supérieure ou égale à 46.0% du total et inférieure ou égale à 50.0% du total.

Dans une autre variante encore de composition, la proportion en masse de titane est supérieure ou égale à 53.5% du total et inférieure ou égale à 56.5% du total, et la proportion en masse de niobium est supérieure ou égale à 43.5% du total et inférieure ou égale à 46.5% du total.

Plus particulièrement, dans chaque variante, le total des proportions en masse du titane et du niobium est compris entre 99.7% et 100% du total.

Plus particulièrement, la proportion en masse d'oxygène est inférieure ou égale à 0.10% du total, voire encore inférieure ou égale à 0.085% du total.

Plus particulièrement, la proportion en masse de tantale est inférieure ou égale à 0.10% du total.

Plus particulièrement, la proportion en masse de carbone est inférieure ou égale à 0.04% du total, notamment inférieure ou égale à 0.020% du total, voire encore inférieure ou égale à 0.0175% du total.

Plus particulièrement, la proportion en masse de fer est inférieure ou égale à 0.03% du total, notamment inférieure ou égale à 0.025% du total, voire encore inférieure ou égale à 0.020% du total.

Plus particulièrement, la proportion en masse d'azote est inférieure ou égale à 0.02% du total, notamment inférieure ou égale à 0.015% du total, voire encore inférieure ou égale à 0.0075% du total.

Plus particulièrement, la proportion en masse d'hydrogène est inférieure ou égale à 0.01% du total, notamment inférieure ou égale à 0.0035% du total, voire encore inférieure ou égale à 0.0005% du total.

Plus particulièrement, la proportion en masse de nickel est inférieure ou égale à 0.01% du total.

Plus particulièrement, la proportion en masse de silicium est inférieure ou égale à 0.01% du total.

Plus particulièrement, la proportion en masse de nickel est inférieure ou égale à 0.01% du total, notamment inférieure ou égale à 0.16% du total.

Plus particulièrement, la proportion en masse de matériau ductile ou cuivre est inférieure ou égale à 0.01% du total, notamment inférieure ou égale à 0.005% du total.

Plus particulièrement, la proportion en masse d'aluminium est inférieure ou égale à 0.01% du total.

Ce ressort spiralé a une limite élastique supérieure ou égale à 1000 MPa. Plus particulièrement, le ressort spiralé a une limite élastique supérieure ou égale à 1500 MPa.

Plus particulièrement encore, le ressort spiralé a une limite élastique supérieure ou égale à 2000 MPa.

De façon avantageuse, ce ressort spiralé a un module d'élasticité supérieur à 60 GPa et inférieur ou égal à 80 GPa.

L'alliage ainsi déterminé permet, selon le traitement appliqué en cours d'élaboration, la confection de ressorts spiralés qui sont des ressorts-spiraux avec une limite élastique supérieure ou égale à 1000 MPa, ou des ressorts de barillet, notamment lorsque la limite élastique supérieure ou égale à 1500 MPa.

L'application à un ressort-spiral nécessite des propriétés aptes à garantir le maintien des performances chronométriques malgré la variation des températures d'utilisation d'une montre incorporant un tel ressort-spiral. Le coefficient thermoélastique, dit aussi CTE de l'alliage, a alors une grande importance. L'alliage en phase bêta écroui présente un CTE fortement positif, et la précipitation de la phase alpha qui possède un CTE fortement négatif, permet de ramener l'alliage biphasé à un CTE proche de zéro, ce qui est particulièrement favorable. Pour former un oscillateur chronométrique avec un balancier en CuBe ou en maillechort, un CTE de +/- 10 ppm/°C doit être atteint. La formule qui lie le CTE de l'alliage et les coefficients de dilatation du spiral est du balancier est la suivante :

$$CT = \frac{dM}{dT} = \left( \frac{1}{2E} \frac{dE}{dT} - \beta + \frac{3}{2} \alpha \right) \times 86400 \frac{s}{j°C}$$

Les variables M et T sont respectivement la marche et la température. E est le module de Young du ressort-spiral, et, dans cette formule, E, $\beta$ et $\alpha$ s'expriment en °C$^{-1}$.

CT est le coefficient thermique de l'oscillateur, (1/E. dE/dT) est le CTE de l'alliage spiral, $\beta$ est le coefficient de dilatation du balancier et $\alpha$ celui du spiral.

L'invention concerne encore un procédé de fabrication d'un ressort spiralé d'horlogerie, caractérisé en ce qu'on met en œuvre successivement les étapes suivantes :

- (10) élaboration d'une ébauche dans un alliage comportant du niobium et du titane, qui est un alliage de type binaire comportant du niobium et du titane, et qui comporte :
- niobium : balance à 100% ;
- une proportion en masse de titane supérieure ou égale à 45.0% du total et inférieure ou égale à 48.0% du total,
- des traces d'autres composants parmi O, H, C, Fe, Ta, N, Ni, Si, Cu, Al, chacun desdits composants de traces étant compris entre 0 et 1600 ppm du total en masse, et la somme desdites traces étant inférieure ou égale à 0.3% en masse;
- (20) application audit alliage de séquences couplées de déformation-traitement thermique de précipitation, comportant l'application de déformations alternées à des traitements thermiques, jusqu'à l'obtention d'une microstructure biphasée comprenant une solution solide de niobium avec du titane en phase $\beta$ et une solution solide de niobium avec du titane en phase a, la teneur en titane en phase $\alpha$ étant supérieure à 10% en volume, avec une limite élastique supérieure ou égale à 1000 MPa, et un module d'élasticité supérieur à 60 GPa et inférieur ou égal à 80 GPa ;
- (30) tréfilage jusqu'à l'obtention d'un fil de section ronde, et laminage à profil rectangulaire compatible avec la section d'entrée d'une calandre ou d'une broche d'estrapadage ou avec une mise en bague dans le cas d'un ressort de barillet;

- (40) calandrage en clé de sol des spires pour former un ressort de barillet avant son premier armage, ou estrapadage pour former un ressort-spiral, ou mise en bague et traitement thermique pour un ressort de barillet.

De façon particulière, on effectue l'application à cet alliage de séquences couplées 20 de déformation-traitement thermique de précipitation, comportant l'application de déformations (21) alternées à des traitements thermiques (22), jusqu'à l'obtention d'une microstructure biphasée comprenant une solution solide de niobium avec du titane en phase β et une solution solide de niobium avec du titane en phase a, la teneur en titane en phase α étant supérieure à 10% en volume, avec une limite élastique supérieure ou égale à 2000 MPa. Plus particulièrement, le cycle de traitement comporte alors préalablement une trempe bêta (15) à un diamètre donné, de façon à ce que toute la structure de l'alliage soit bêta, puis une succession de ces séquences couplées de déformation-traitement thermique de précipitation.

Dans ces séquences couplées de déformation-traitement thermique de précipitation, chaque déformation est effectuée avec un taux de déformation donné compris entre 1 et 5, ce taux de déformation répondant à la formule classique 2ln(d0/d), où d0 est le diamètre de la dernière trempe bêta, et où d est le diamètre du fil écroui. Le cumul global des déformations sur l'ensemble de cette succession de phases amène un taux total de déformation compris entre 1 et 14. Chaque séquence couplée de déformation-traitement thermique de précipitation comporte, à chaque fois, un traitement thermique de précipitation de la phase alpha Ti (300-700 °C, 1h-30h).

Cette variante de procédé comportant une trempe bêta est particulièrement adaptée à la fabrication de ressorts de barillet. Plus particulièrement, cette trempe bêta est un traitement de mise en solution, avec une durée comprise entre 5 minutes et 2 heures à une température comprise entre 700°C et 1000°C, sous vide, suivie d'un refroidissement sous gaz.

Plus particulièrement encore, cette trempe bêta est un traitement de mise en solution, avec 1 heure à 800°C sous vide, suivie d'un refroidissement sous gaz.

Pour revenir aux séquences couplées de déformation-traitement thermique de précipitation, plus particulièrement chaque séquence couplée de déformation-traitement thermique de précipitation comporte un traitement de précipitation d'une durée un traitement de précipitation d'une durée comprise entre 1 heure et 80 heures à une température comprise entre 350°C et 700°C. Plus particulièrement, la durée est comprise entre 1 heure et 10 heures à une température comprise entre 380°C et 650°C. Plus particulièrement encore, la durée est de 1 heure à 12 heures, à une température de 380°C. De préférence, on applique des traitements thermiques longs, par exemple des traitements thermiques réalisés pendant une durée comprise entre 15 heures et 75 heures à une température comprise entre 350°C et 500°C. Par exemple on applique des traitements thermiques de 75h à 400h à 350°C, de 25h à 400°C ou de 18h à 480°C.

Plus particulièrement, le procédé comporte entre une et cinq, de préférence de trois à cinq, séquences couplées de déformation-traitement thermique de précipitation.

Plus particulièrement, la première séquence couplée de déformation-traitement thermique de précipitation comporte une première déformation avec au moins 30 % de réduction de section.

Plus particulièrement, chaque séquence couplée de déformation-traitement thermique de précipitation, autre que la première, comporte une déformation entre deux traitements thermiques de précipitation avec au moins 25 % de réduction de section.

Plus particulièrement, après cette élaboration de ladite ébauche en alliage, et avant le tréfilage, dans une étape supplémentaire 25, on ajoute à l'ébauche une couche superficielle de matériau ductile pris parmi le cuivre, le nickel, le cupro-nickel, le cupro-manganèse, l'or, l'argent, le nickel-phosphore Ni-P et le nickel-bore Ni-B, ou similaire, pour faciliter la mise en forme de fil par étirage et tréfilage et laminage. Et, après le tréfilage, ou après le laminage, ou après une opération ultérieure de calandrage ou estrapadage, ou encore de mise en bague et traitement thermique dans le cas d'un ressort de barillet, on débarrasse le fil de sa couche du matériau ductile, notamment par attaque chimique, dans une étape 50.

Pour le ressort de barillet, il est en effet possible d'effectuer la fabrication par mise en bague et traitement thermique, où la mise en bague remplace le calandrage. Le ressort de barillet est encore généralement traité thermiquement après mise en bague ou après calandrage.

Un ressort spiral est, quant à lui, généralement, encore traité thermiquement après estrapadage.

Plus particulièrement, on effectue la dernière phase de déformation sous la forme d'un laminage à plat, et on pratique le dernier traitement thermique sur le ressort calandré ou mis en bague ou estrapadé. Plus particulièrement, après le tréfilage, on lamine le fil à plat, avant la fabrication du ressort proprement dit par calandrage ou estrapadage ou mise en bague.

Dans une variante, on dépose la couche superficielle de matériau ductile de façon à constituer un ressort spiral dont le pas n'est pas un multiple de l'épaisseur de la lame. Dans une autre variante, on dépose la couche superficielle de matériau ductile de façon à constituer un ressort dont le pas est variable.

Dans une application horlogère particulière, du matériau ductile ou cuivre est ainsi ajouté à un moment donné pour faciliter la mise en forme du fil par étirage et tréfilage, de telle manière à ce qu'il en reste une épaisseur de 10 à 500 micromètres sur le fil au diamètre final de 0.3 à 1 millimètres. Le fil est débarrassé de sa couche de matériau ductile ou cuivre notamment par attaque chimique, puis est laminé à plat avant la fabrication du ressort proprement dit.

L'apport de matériau ductile ou cuivre peut être galvanique, ou bien mécanique, c'est alors une chemise ou un tube de matériau ductile ou cuivre qui est ajusté sur une barre d'alliage niobium-titane à un gros diamètre, puis qui est amincie au cours des étapes de déformation du barreau composite.

L'enlèvement de la couche est notamment réalisable par attaque chimique, avec une solution à base de cyanures ou à base d'acides, par exemple d'acide nitrique.

L'invention permet, ainsi, notamment la réalisation d'un ressort spiralé de barillet en alliage de type niobium-titane, typiquement à 47 % en masse de titane (46-50%). Par une combinaison adéquate d'étapes de déformation et de traitement thermique, il est possible d'obtenir une microstructure bi-phasée lamellaire très fine, en particulier nanométrique, comprenant une solution solide de niobium avec du titane en phase β et une solution solide de niobium avec du titane en phase a, la teneur en titane en phase α étant supérieure à 10% en volume. Cet alliage combine une limite élastique très élevée, supérieure au moins à 1000 MPa, ou supérieure à 1500 MPa, voire à 2000 MPa sur du fil, et un module d'élasticité très bas, de l'ordre de 60 Gpa à 80 GPa. Cette combinaison de propriétés convient bien pour un ressort de barillet ou ressort-spiral. Cet alliage de type niobium-titane se laisse facilement recouvrir de matériau ductile ou cuivre, ce qui facilite grandement sa déformation par tréfilage.

Un tel alliage est connu et utilisé pour la fabrication de supraconducteurs, tels qu'appareils d'imagerie par résonance magnétique, ou accélérateurs de particules), mais n'est pas utilisé en horlogerie. Sa microstructure fine et bi-phasée est recherchée dans le cas des supraconducteurs pour des raisons physiques et a comme effet collatéral bienvenu une amélioration des propriétés mécaniques de l'alliage.

Un alliage de type NbTi47 convient particulièrement bien pour la réalisation d'un ressort de barillet, et aussi pour la réalisation de ressorts-spiraux.

Un alliage de type binaire comportant du niobium et du titane, du type sélectionné ci-dessus pour la mise en œuvre de l'invention, est également susceptible d'être utilisé comme fil spiral, il présente un effet similaire à celui de l' « Elinvar », avec un coefficient thermo-élastique pratiquement nul dans la plage de températures d'utilisation usuelle de montres, et apte à la fabrication de spiraux auto-compensateurs, en particulier pour des alliages niobium-titane avec une proportion en masse de titane de 40%, 50%, ou 65%.

La sélection de composition selon l'invention s'est imposée aussi par ailleurs pour l'application supraconducteur, et est favorable en raison de la teneur en titane, qui évite les inconvénients :

- des alliages trop chargés en titane, où apparaît une phase martensitique, et où l'on se heurte à des difficultés de mise en forme ;
- des alliages trop faibles en titane, qui se traduisent par moins de phase alpha lors du ou des traitements thermiques de précipitation.

La mise en forme du lacet d'un ressort-spiral implique d'éviter les alliages à fort titane, et la nécessité de l'atteinte de la compensation thermique spiral implique d'éviter les alliages à bas titane.

**Revendications**

1. Ressort spiralé d'horlogerie à structure bi-phasée, **caractérisé en ce que** le matériau dudit ressort spiralé est un alliage de type binaire comportant du niobium et du titane, et qui comporte :

   - niobium : balance à 100% ;
   - une proportion en masse de titane supérieure ou égale à 45.0% du total et inférieure ou égale à 48.0% du total,
   - des traces d'autres composants parmi O, H, C, Fe, Ta, N, Ni, Si, Cu, Al, chacun desdits composants de traces étant compris entre 0 et 1600 ppm du total en masse, et la somme desdites traces étant inférieure ou égale à 0.3% en masse, et **caractérisé en ce que** ledit ressort spiralé a une microstructure biphasée comprenant une solution solide de niobium avec du titane en phase β et une solution solide de niobium avec du titane en phase a, la teneur en titane en phase α étant supérieure à 10% en volume.

2. Ressort spiralé selon la revendication 1, **caractérisé en ce que** le total des proportions en masse du titane et du niobium est compris entre 99.7% et 100% du total.

3. Ressort spiralé selon la revendication 1 ou 2, **caractérisé en ce que** la proportion en masse de titane est supérieure ou égale à 46.5% du total.

**4.** Ressort spiralé selon l'une des revendications 1 à 3, **caractérisé en ce que** la proportion en masse de titane est inférieure ou égale à 47.5% du total.

**5.** Ressort spiralé selon l'une des revendications 1 à 4, **caractérisé en ce que** ledit ressort spiralé est un ressort de barillet.

**6.** Ressort spiralé selon l'une des revendications 1 à 4, **caractérisé en ce que** ledit ressort spiralé est un ressort spiral.

**7.** Procédé de fabrication d'un ressort spiralé d'horlogerie, **caractérisé en ce qu'**on met en œuvre successivement les étapes suivantes :

- élaboration d'une ébauche dans un alliage de type binaire comportant du niobium et du titane, et qui comporte :

  - niobium : balance à 100% ;
  - une proportion en masse de titane supérieure ou égale à 45.0% du total et inférieure ou égale à 48.0% du total,

- des traces d'autres composants parmi O, H, C, Fe, Ta, N, Ni, Si, Cu, Al, chacun desdits composants de traces étant compris entre 0 et 1600 ppm du total en masse, et la somme desdites traces étant inférieure ou égale à 0.3% en masse;
- exécution d'un cycle de traitement comportant préalablement une trempe bêta à un diamètre donné, de façon à ce que toute la structure de l'alliage soit bêta, puis application audit alliage d'une succession de séquences couplées de déformation-traitement thermique de précipitation, comportant l'application de déformations alternées à des traitements thermiques, jusqu'à l'obtention d'une microstructure biphasée comprenant une solution solide de niobium avec du titane en phase $\beta$ et une solution solide de niobium avec du titane en phase a, la teneur en titane en phase $\alpha$ étant supérieure à 10% en volume, avec une limite élastique supérieure ou égale à 1000 MPa, et un module d'élasticité supérieur à 60 GPa et inférieur ou égal à 80 GPa ;
- tréfilage jusqu'à l'obtention d'un fil de section ronde, et laminage à profil rectangulaire compatible avec la section d'entrée d'une calandre ou d'une broche d'estrapadage ou avec une mise en bague;
- calandrage en clé de sol des spires pour former un ressort de barillet avant son premier armage, ou estrapadage pour former un ressort-spiral, ou mise en bague et traitement thermique pour un ressort de barillet.

**8.** Procédé de fabrication d'un ressort spiralé selon la revendication 7, **caractérisé en ce qu'**on effectue la dernière phase de déformation sous la forme d'un laminage à plat, et **en ce qu'**on pratique le dernier traitement thermique sur le ressort calandré ou mis en bague ou estrapadé.

**9.** Procédé de fabrication d'un ressort spiralé selon la revendication 7, **caractérisé en ce qu'**on effectue l'application audit alliage de séquences couplées de déformation-traitement thermique de précipitation, comportant l'application de déformations alternées à des traitements thermiques, jusqu'à l'obtention d'une microstructure biphasée comprenant une solution solide de niobium avec du titane en phase $\beta$ et une solution solide de niobium avec du titane en phase a, la teneur en titane en phase $\alpha$ étant supérieure à 10% en volume, avec une limite élastique supérieure ou égale à 2000 MPa, le cycle de traitement comportant préalablement une trempe bêta à un diamètre donné, de façon à ce que toute la structure de l'alliage soit bêta, puis une succession desdites séquences couplées de déformation-traitement thermique de précipitation, où chaque déformation est effectuée avec un taux de déformation donné compris entre 1 et 5, le cumul global des déformations sur l'ensemble de ladite succession de phases amenant un taux total de déformation compris entre 1 et 14, et qui comporte à chaque fois un traitement thermique de précipitation de la phase alpha Ti.

**10.** Procédé de fabrication d'un ressort spiralé selon la revendication 9, **caractérisé en ce que** ladite trempe bêta est un traitement de mise en solution, avec une durée comprise entre 5 minutes et 2 heures à une température comprise entre 700°C et 1000°C, sous vide, suivie d'un refroidissement sous gaz.

**11.** Procédé de fabrication d'un ressort spiralé selon la revendication 10, **caractérisé en ce que** ladite trempe bêta est un traitement de mise en solution, avec 1 heure à 800°C sous vide, suivie d'un refroidissement sous gaz.

**12.** Procédé de fabrication d'un ressort spiralé selon la revendication 7, **caractérisé en ce que** chaque séquence couplée de déformation-traitement thermique de précipitation comporte un traitement de précipitation d'une durée comprise entre 1 heure et 80 heures à une température comprise entre 350°C et 700°C.

13. Procédé de fabrication d'un ressort spiralé selon la revendication 12, **caractérisé en ce que** chaque séquence couplée de déformation-traitement thermique de précipitation comporte un traitement de précipitation d'une durée comprise entre 1 heure et 10 heures à une température comprise entre 380°C et 650°C.

14. Procédé de fabrication d'un ressort spiralé selon la revendication 13, **caractérisé en ce que** chaque séquence couplée de déformation-traitement thermique de précipitation comporte un traitement de précipitation d'une durée de 1 heure à 12 heures à 450 °C.

15. Procédé de fabrication d'un ressort spiralé selon la revendication 7, **caractérisé en ce que** ledit procédé comporte entre une et cinq dites séquences couplées de déformation-traitement thermique de précipitation.

16. Procédé de fabrication d'un ressort spiralé selon la revendication 7, **caractérisé en ce que** la première dite séquence couplée de déformation-traitement thermique de précipitation comporte une première déformation avec au moins 30 % de réduction de section.

17. Procédé de fabrication d'un ressort spiralé selon la revendication 16, **caractérisé en ce que** chaque dite séquence couplée de déformation-traitement thermique de précipitation, autre que la première, comporte une déformation entre deux traitements thermiques de précipitation avec au moins 25 % de réduction de section.

18. Procédé de fabrication d'un ressort spiral selon l'une des revendications 7 à 17, **caractérisé en ce que**, après ladite élaboration de ladite ébauche en alliage, et avant ledit tréfilage, on ajoute à ladite ébauche une couche superficielle de matériau ductile pris parmi le cuivre, le nickel, le cupro-nickel, le cupro-manganèse, l'or, l'argent, le nickel-phosphore Ni-P et le nickel-bore Ni-B, pour faciliter la mise en forme de fil par étirage et tréfilage et laminage, et **en ce que**, après ledit tréfilage, ou après ledit laminage, ou après une opération ultérieure de calandrage ou estrapadage ou de mise en bague, on débarrasse ledit fil de sa couche dudit matériau ductile par attaque chimique.

19. Procédé de fabrication d'un ressort spiralé selon la revendication 18, **caractérisé en ce que**, après ledit tréfilage, on lamine ledit fil à plat, avant la fabrication du ressort proprement dit par calandrage ou estrapadage ou mise en bague.

20. Procédé de fabrication d'un ressort spiralé selon la revendication 18, **caractérisé en ce qu'**on dépose ladite couche superficielle de matériau ductile de façon à constituer un ressort dont le pas est constant et n'est pas un multiple de l'épaisseur de lame.

**Patentansprüche**

1. Spiralförmige Uhrenfeder mit zweiphasiger Struktur, **dadurch gekennzeichnet, dass** das Material der spiralförmigen Feder eine Legierung vom binären Typ ist, umfassend Niob und Titan, und die umfasst:

   - Niob: Rest zu 100 %;
   - einen Massenanteil an Titan größer als oder gleich 45,0 % der Gesamtheit und kleiner als oder gleich 48,0 % der Gesamtheit,
   - Spuren von anderen Bestandteilen von O, H, C, Fe, Ta, N, Ni, Si, Cu, Al, wobei jeder der Spurenbestandteile zwischen 0 und 1600 Massen-ppm der Gesamtheit liegt und die Summe der Spuren kleiner als oder gleich 0,3 Massen-% ist, und **dadurch gekennzeichnet, dass** die spiralförmige Feder eine zweiphasige Mikrostruktur aufweist, umfassend eine feste Lösung von Niob mit $\beta$-Phasen-Titan und eine feste Lösung von Niob mit $\alpha$-Phasen-Titan, wobei der Gehalt an $\alpha$-Phasen-Titan mehr als 10 Volumen-% beträgt.

2. Spiralförmige Feder nach Anspruch 1, **dadurch gekennzeichnet, dass** die Gesamtheit von Massenanteilen an Titan und Niob zwischen 99,7 % und 100 % der Gesamtheit liegt.

3. Spiralförmige Feder nach Anspruch 1 oder 2, **dadurch gekennzeichnet, dass** der Massenanteil an Titan größer als oder gleich 46,5 % der Gesamtheit ist.

4. Spiralförmige Feder nach einem der Ansprüche 1 bis 3, **dadurch gekennzeichnet, dass** der Massenanteil an Titan kleiner als oder gleich 47,5 % der Gesamtheit ist.

**5.** Spiralförmige Feder nach einem der Ansprüche 1 bis 4, **dadurch gekennzeichnet, dass** die spiralförmige Feder eine Federhausfeder ist.

**6.** Spiralförmige Feder nach einem der Ansprüche 1 bis 4, **dadurch gekennzeichnet, dass** die spiralförmige Feder eine Spiralfeder ist.

**7.** Verfahren zur Herstellung einer spiralförmigen Uhrenfeder, **dadurch gekennzeichnet, dass** nacheinander die folgenden Schritte durchgeführt werden:

   - Erzeugen eines Rohwerks aus einer Legierung vom binären Typ, umfassend Niob und Titan, und die umfasst:

      - Niob: Rest zu 100 %;
      - einen Massenanteil an Titan größer als oder gleich 45,0 % der Gesamtheit und kleiner als oder gleich 48,0 % der Gesamtheit,
      - Spuren von anderen Bestandteilen von O, H, C, Fe, Ta, N, Ni, Si, Cu, Al, wobei jeder der Spurenbestandteile zwischen 0 und 1600 Massen-ppm der Gesamtheit liegt und die Summe der Spuren kleiner als oder gleich 0,3 Massen-% ist;
      - Ausführen eines Behandlungszyklus, umfassend vorab ein Beta-Abschrecken zu einem gegebenen Durchmesser, so dass die gesamte Struktur der Legierung beta ist, dann ein Anwenden einer Abfolge von gepaarten Sequenzen von Verformung-Wärmebehandlung zur Ausscheidung auf die Legierung, umfassend das Anwenden von Verformungen, die mit Wärmebehandlungen alternieren, bis zum Erhalten einer zweiphasigen Mikrostruktur, umfassend eine feste Lösung von Niob mit $\beta$-Phasen-Titan und eine feste Lösung von Niob mit $\alpha$-Phasen-Titan, wobei der Gehalt an $\alpha$-Phasen-Titan mehr als 10 Volumen-% beträgt, mit einer Streckgrenze größer als oder gleich 1000 MPa und einem Elastizitätsmodul größer als 60 GPa und kleiner als oder gleich 80 GPa;
      - Drahtziehen bis zum Erhalten eines Drahts mit rundem Querschnitt und Auswalzen zu einem rechteckigen Profil, das mit dem Eintrittsabschnitt eines Kalanders oder einer Federwinderspindel oder mit einem Einsetzen in einen Ring kompatibel ist;
      - Kalandrieren zu Violinschlüssel-Windungen, um eine Federhausfeder vor ihrem ersten Spannen zu bilden, oder Federwinden, um eine Spiralfeder zu bilden, oder Einsetzen in einen Ring und Wärmebehandeln für eine Federhausfeder.

**8.** Verfahren zur Herstellung einer spiralförmigen Feder nach Anspruch 7, **dadurch gekennzeichnet, dass** die letzte Verformungsphase in der Form eines flachen Auswalzen vorgenommen wird und dass die letzte Wärmebehandlung an der kalandrierten oder in einen Ring eingesetzten oder federgewundenen Feder ausgeübt wird.

**9.** Verfahren zur Herstellung einer spiralförmigen Feder nach Anspruch 7, **dadurch gekennzeichnet, dass** das Anwenden von gepaarten Sequenzen von Verformung-Wärmebehandlung zur Ausscheidung auf die Legierung, umfassend das Anwenden von Verformungen, die mit Wärmebehandlungen alternieren, bis zum Erhalten einer zweiphasigen Mikrostruktur, umfassend eine feste Lösung von Niob mit $\beta$-Phasen-Titan und eine feste Lösung von Niob mit $\alpha$-Phasen-Titan, wobei der Gehalt an $\alpha$-Phasen-Titan mehr als 10 Volumen-% beträgt, mit einer Streckgrenze größer als oder gleich 2000 MPa, durchgeführt wird, wobei der Behandlungszyklus vorab ein Beta-Abschrecken zu einem gegebenen Durchmesser, so dass die gesamte Struktur der Legierung beta ist, dann eine Abfolge der gepaarten Sequenzen von Verformung-Wärmebehandlung zur Ausscheidung umfasst, wobei jede Verformung mit einem gegebenen Verformungsgrad durchgeführt wird, der zwischen 1 und 5 liegt, wobei die Gesamtsumme von Verformungen von der Gesamtheit der Abfolge von Phasen zu einem Gesamtverformungsgrad führt, der zwischen 1 und 14 liegt, und die jedes Mal eine Wärmebehandlung zur Ausscheidung des Alpha-Phasen-Ti umfasst.

**10.** Verfahren zur Herstellung einer spiralförmigen Feder nach Anspruch 9, **dadurch gekennzeichnet, dass** das Beta-Abschrecken eine Behandlung in Lösung ist, mit einer Dauer, die zwischen 5 Minuten und 2 Stunden liegt, bei einer Temperatur, die zwischen 700 °C und 1000 °C liegt, unter Vakuum, gefolgt von einem Abkühlen unter Gas.

**11.** Verfahren zur Herstellung einer spiralförmigen Feder nach Anspruch 10, **dadurch gekennzeichnet, dass** das Beta-Abschrecken eine Behandlung in Lösung ist, mit 1 Stunde bei 800 °C unter Vakuum, gefolgt von einem Abkühlen unter Gas.

**12.** Verfahren zur Herstellung einer spiralförmigen Feder nach Anspruch 7, **dadurch gekennzeichnet, dass** jede gepaarte Sequenz von Verformung-Wärmebehandlung zur Ausscheidung eine Ausscheidungsbehandlung von einer Dauer, die zwischen 1 Stunde und 80 Stunden liegt, bei einer Temperatur, die zwischen 350 °C und 700 °C liegt, umfasst.

13. Verfahren zur Herstellung einer spiralförmigen Feder nach Anspruch 12, **dadurch gekennzeichnet, dass** jede gepaarte Sequenz von Verformung-Wärmebehandlung zur Ausscheidung eine Ausscheidungsbehandlung von einer Dauer, die zwischen 1 Stunde und 10 Stunden liegt, bei einer Temperatur, die zwischen 380 °C und 650 °C liegt, umfasst.

14. Verfahren zur Herstellung einer spiralförmigen Feder nach Anspruch 13, **dadurch gekennzeichnet, dass** jede gepaarte Sequenz von Verformung-Wärmebehandlung zur Ausscheidung eine Ausscheidungsbehandlung von einer Dauer von 1 Stunde bis 12 Stunden bei 450 °C umfasst.

15. Verfahren zur Herstellung einer spiralförmigen Feder nach Anspruch 7, **dadurch gekennzeichnet, dass** das Verfahren zwischen einer und fünf der gepaarten Sequenzen von Verformung-Wärmebehandlung zur Ausscheidung umfasst.

16. Verfahren zur Herstellung einer spiralförmigen Feder nach Anspruch 7, **dadurch gekennzeichnet, dass** die erste der gepaarten Sequenzen von Verformung-Wärmebehandlung zur Ausscheidung eine erste Verformung mit einer Querschnittsverringerung von mindestens 30 % umfasst.

17. Verfahren zur Herstellung einer spiralförmigen Feder nach Anspruch 16, **dadurch gekennzeichnet, dass** jede der gepaarten Sequenzen von Verformung-Wärmebehandlung zur Ausscheidung mit Ausnahme der ersten eine Verformung zwischen zwei Wärmebehandlungen zur Ausscheidung mit einer Querschnittsverringerung von mindestens 25 % umfasst.

18. Verfahren zur Herstellung einer spiralförmigen Feder nach einem der Ansprüche 7 bis 17, **dadurch gekennzeichnet, dass** nach dem Erzeugen des Rohwerks aus Legierung und vor dem Drahtziehen eine Oberflächenschicht aus formbarem Material, aus Kupfer, Nickel, Kupfer-Nickel, Kupfer-Mangan, Gold, Silber, Nickel-Phosphor Ni-P und Nickel-Bor Ni-B genommen, dem Rohwerk hinzugefügt wird, um das Formgeben des Drahts durch Strecken und Drahtziehen und Auswalzen zu erleichtern, und dass nach dem Drahtziehen oder nach dem Auswalzen oder nach einem anschließenden Kalandrier- oder Federwinde- oder Ringeinsatzvorgang der Draht durch chemisches Ätzen von seiner Schicht aus dem formbaren Material befreit wird.

19. Verfahren zur Herstellung einer spiralförmigen Feder nach Anspruch 18, **dadurch gekennzeichnet, dass** nach dem Drahtziehen der Draht flach ausgewalzt wird, vor der Herstellung der eigentlichen Feder durch Kalandrieren oder Federwinden oder Einsetzen in einen Ring.

20. Verfahren zur Herstellung einer spiralförmigen Feder nach Anspruch 18, **dadurch gekennzeichnet, dass** die Oberflächenschicht aus formbarem Material abgeschieden wird, so dass eine Feder gebildet wird, deren Steigung konstant ist und nicht ein Vielfaches der Blattdicke ist.

**Claims**

1. Spiraled timepiece spring with a two-phase structure, **characterised in that** the material of said spiral spring is a binary alloy including niobium and titanium, and which includes:

   - niobium: the remainder to 100%;
   - a proportion by mass of titanium greater than or equal to 45.0% of the total and less than or equal to 48.0% of the total;
   - traces of other components among O, H, C, Fe, Ta, N, Ni, Si, Cu, Al, each of said trace components being comprised between 0 and 1600 ppm of the total by mass, and the sum of said traces being less than or equal to 0.3% by mass, and **characterised in that** said spiral spring has a two-phase microstructure comprising a solid solution of niobium with β-phase titanium and a solid solution of niobium with α-phase titanium, the α-phase titanium content being greater than 10% by volume.

2. Spiraled spring according to claim 1, **characterised in that** the total of the proportions by mass of titanium and niobium is comprised between 99.7% and 100% of the total.

3. Spiraled spring according to claim 1 or 2, **characterised in that** the proportion by mass of titanium is greater than or equal to 46.5% of the total.

4. Spiraled spring according to any of claims 1 to 3, **characterised in that** the proportion by mass of titanium is less than or equal to 47.5% of the total.

5. Spiraled spring according to any of claims 1 to 4, **characterised in that** said spiral spring is a mainspring.

6. Spiraled spring according to any of claims 1 to 4, **characterised in that** said spiral spring is a balance spring.

7. Method for manufacturing a spiraled timepiece spring, **characterised in that** the following steps are implemented in succession:

   - producing a blank from a binary alloy including niobium and titanium, and which includes:

     - niobium: the remainder to 100%;
     - a proportion by mass of titanium greater than or equal to 45.0% of the total and less than or equal to 48.0% of the total,
     - traces of other components among O, H, C, Fe, Ta, N, Ni, Si, Cu, Al, each of said trace components being comprised between 0 and 1600 ppm by mass of the total, and the sum of said traces being less than or equal to 0.3% by mass;

   - performing a treatment cycle including a prior beta-quenching treatment at a given diameter, such that the entire structure of the alloy is beta, then applying to said alloy a succession of the pairs of deformation-precipitation heat treatment sequences, including the application of deformations alternating with heat treatments until a two-phase microstructure is obtained comprising a solid solution of niobium with $\beta$-phase titanium and a solid solution of niobium with $\alpha$-phase titanium, the $\alpha$-phase titanium content being greater than or equal 10% by volume, with an elastic limit higher than or equal to 1000 MPa, and a modulus of elasticity higher than 60 GPa and less than or equal to 80 GPa;
   - wire drawing until obtaining a wire of round cross-section, and rectangular profile unformed rolling compatible with the entry cross-section of a calendre roller press or of a winder arbour, or with an insertion in a ring operation;
   - forming coils in the shape of a treble clef to form a mainspring prior to its first coiling, or winding to form a balance spring, or insertion in a ring and heat treatment to form a mainspring.

8. Method for manufacturing a spiraled spring according to claim 7, **characterised in that** the last deformation phase is carried out in the form of flat unformed rolling, and **in that** the last heat treatment is performed on the calendered or inserted in a ring or wound spring.

9. Method for manufacturing a spiraled spring according to claim 7, **characterised in that** there is applied to said alloy pairs of deformation-precipitation heat treatment sequences, including the application of deformations alternating with heat treatments until a two-phase microstructure is obtained comprising a solid solution of niobium with $\beta$-phase titanium and a solid solution of niobium with $\alpha$-phase titanium, the $\alpha$-phase titanium content being greater than 10% by volume, with an elastic limit higher than or equal to 2000 MPa, the treatment cycle initially including beta-quenching at a given diameter, such that the entire structure of the alloy is beta, then a series of said pairs of deformation-precipitation heat treatment sequences, wherein each deformation is performed with a given deformation rate comprised between 1 and 5, the overall accumulation of deformations over the entire series of phases giving a total deformation rate comprised between 1 and 14, and which includes each time a precipitation heat treatment of the alpha phase Ti.

10. Method for manufacturing a spiraled spring according to claim 9, **characterised in that** said beta-quenching is a solution treatment, with a duration comprised between 5 minutes and 2 hours at a temperature comprised between 700°C and 1000°C, under vacuum, followed by gas cooling.

11. Method for manufacturing a spiraled spring according to claim 10, **characterised in that** said beta-quenching is a solution treatment, with 1 hour at 800°C, under vacuum, followed by gas cooling.

12. Method for manufacturing a spiraled spring according to claim 7, **characterised in that** each pair of deformation-precipitation heat treatment sequences includes a precipitation treatment with a duration comprised between 1 hour and 80 hours at a temperature comprised between 350°C and 700°C.

13. Method for manufacturing a spiraled spring according to claim 12, **characterised in that** each pair of deformation-precipitation heat treatment sequences includes a precipitation treatment with a duration comprised between 1 hour and 10 hours at a temperature comprised between 380°C and 650°C.

14. Method for manufacturing a spiraled spring according to claim 13, **characterised in that** each pair of deformation-precipitation heat treatment sequences includes a precipitation treatment with a duration of between 1 hour and 12 hours at 450 °C.

15. Method for manufacturing a spiraled spring according to claim 7, **characterised in that** said method includes between one and five of said pairs of deformation-precipitation heat treatment sequences.

16. Method for manufacturing a spiraled spring according to claim 7, **characterised in that** said first pair of deformation-precipitation heat treatment sequences includes a first deformation with an at least 30% reduction in cross-section.

17. Method for manufacturing a spiraled spring according to claim 16, **characterised in that** each said pair of deformation-precipitation heat treatment sequences, apart from the first, includes one deformation between two precipitation heat treatments with at least a 25% reduction in cross-section.

18. Method for manufacturing a spiraled spring according to any of claims 7 to 17, **characterised in that**, after said production of said alloy blank, and prior to said wire drawing, there is added to said blank a surface layer of ductile material taken from copper, nickel, cupronickel, cupro manganese, gold, silver, nickel-phosphorus Ni-P and nickel-boron Ni-B, to facilitate shaping by drawing, wire drawing and unformed rolling, and **in that**, after said wire drawing, or after said unformed rolling, or after a subsequent calendering, or winding or insertion in a ring operation, the layer of said ductile material is removed from said wire by etching.

19. Method for manufacturing a spiraled spring according to claim 18, **characterised in that**, after said wire drawing, said wire is rolled flat, before the actual spring is produced by calendering or winding or insertion in a ring.

20. Method for manufacturing a spiraled spring according to claim 18, **characterised in that** said surface layer of ductile material is deposited so as to form a spring whose pitch is constant and is not a multiple of the thickness of the strip.

## Fig. 1

## Fig. 2

## Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070133355 A
- WO 2015189278 A
- WO 2018172164 A
- EP 2993531 A

**Littérature non-brevet citée dans la description**

- **H. MOSER ; CIE.** *Précision Engineering,* 22 Novembre 2016